Europäisches Patentamt

European Patent Office

Office européen des brevets

(19)

(11) Publication number: **0 267 885**
**A2**

## (12) EUROPEAN PATENT APPLICATION

(21) Application number: **87830406.2**

(22) Date of filing: **13.11.87**

(51) Int. Cl.⁴: **B 60 C 27/02**

(30) Priority: **14.11.86 IT 5408486**

(43) Date of publication of application:
**18.05.88 Bulletin 88/20**

(84) Designated Contracting States: **BE DE FR SE**

(71) Applicant: **Notarpietro, Michele**
**Strada Valsalice, 227/7U**
**I-10133 Torino (IT)**

(72) Inventor: **Notarpietro, Michele**
**Strada Valsalice, 227/7U**
**I-10133 Torino (IT)**

(74) Representative: **Notaro, Giancarlo et al**
**c/o Jacobacci-Casetta & Perani S.p.A. Via Alfieri, 17**
**I-10121 Torino (IT)**

(54) **Anti-slipping sector for a motor-vehicle wheel and anti-slipping device comprising a number of these sectors.**

(57) An anti-slip device for a motor vehicle wheel comprises a plurality of anti-slip segments (4) which are fitted astride the tyre in angularly spaced positions. Each segment comprises two end heads (9) connected together by chain means (30) and provided respectively with a hook device (10a) adapted to engage one of the two peripheral edges (11) of the rim (2) of the wheel and with a rapid-locking device (10) adapted to engage the other peripheral edge of the rim (2) of the wheel.

FIG. 9

EP 0 267 885 A2

## Description

Anti-slip segments for a motor vehicle wheel and an anti-slip device comprising a plurality of such segments.

The present invention relates to anti-slip devices for motor vehicle wheels, for use when the motor vehicle is travelling on snow and/or ice.

The object of the present invention is to provide an anti-slip device which is effective and at the same time can be fitted and removed quickly and easily.

In order to achieve this object, the subject of the invention is an anti-slip segment for a motor vehicle wheel, characterised in that it comprises two end heads connected together by chain means and provided respectively with a hook device adapted to engage one of the peripheral edges of the wheel rim and with a rapid-locking device adapted to engage the other peripheral edge of the wheel rim.

A plurality of segments of this type may be fitted astride the tyre of the wheel in positions spaced apart along the periphery of the tyre of enable safe travelling on snow or ice.

In a preferred embodiment, the rapid-locking device comprises
- a support member connected slidably to the corresponding end head of the segment,
- a member for engagement with the wheel rim, pivotably mounted on the support member and adapted to engage the corresponding circumferential edge of the wheel rim,
- resilient means interposed between the engagement member and the support member for urging the engagement member against the edge of the rim, when the segment is locked onto the tyre of the wheel, by bringing the engagement member into contact with the edge of the rim and pivoting the engagement member beyond a dead-point into a locking position, and
- a lever for operating the engagement member.

By virtue of the above characteristics, the anti-slip segment according to the invention is quick and easy to fit and remove and, at the same, ensures an optimum grip on snow- and/or ice-covered ground.

Further characteristics and advantages of the invention will become clear from the description which follows with reference to the appended drawings, provided purely by way of non-limiting example, in which:

Figure 1 is a perspective view of a motor vehicle wheel provided with an anti-slip device according to the invention,

Figure 2 shows the detail indicated by the arrow II in Figure 1, on an enlarged scale,

Figure 3 is a section of the detail of Figure 2.

Figures 4 and 5 show a side view and a plan view of the anti-slip segment shown in Figure 2.

Figure 6 is an exploded perspective view of a detail of Figure 5.

Figures 7 and 8 are a side view and a plan view of a variant of the segment according to the invention,

Figure 9 shows the segment of Figures 7 and 8 in the fitted condition, and

Figure 10 is a perspective view which shows a detail of the segment of Figure 9 on an enlarged scale.

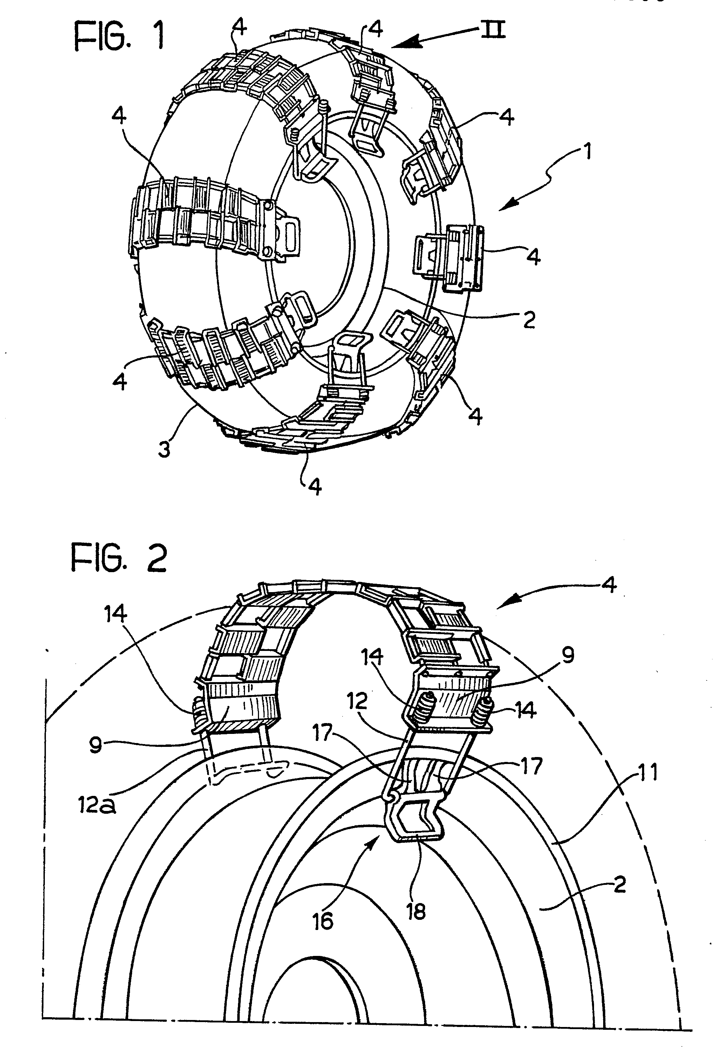

With reference to Figure 1, a motor vehicle wheel is generally indicated 1 and has a rim 2 and a tyre 3. The wheel is provided with an anti-slip device for snow or ice, constituted by a plurality of separate segments 4 arranged astride the tyre 3 in circumferentially spaced-apart positions.

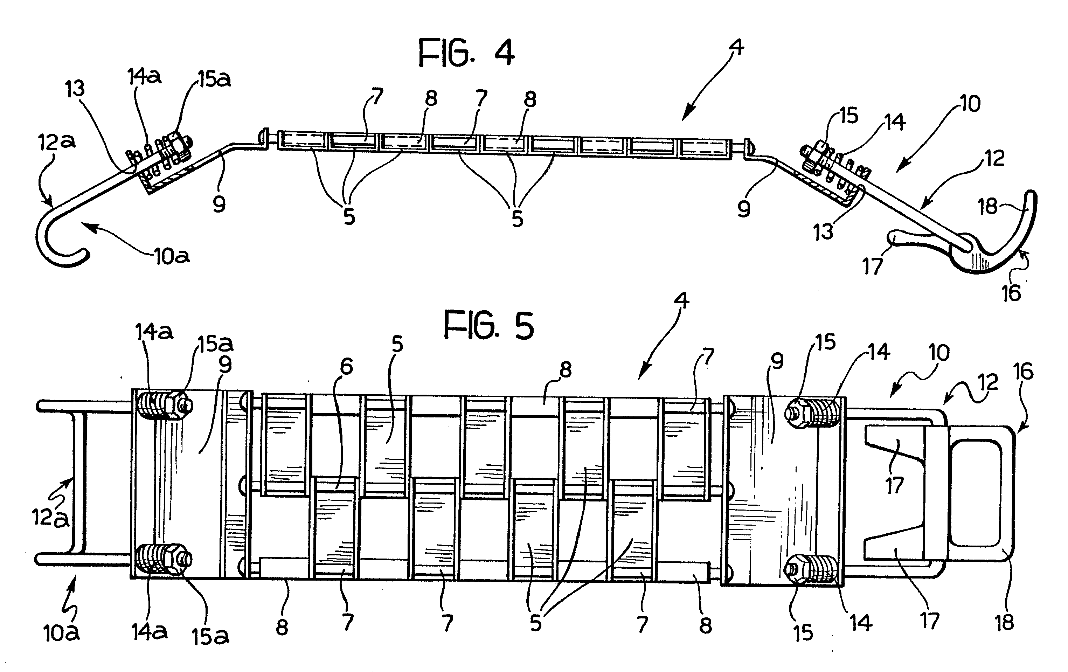

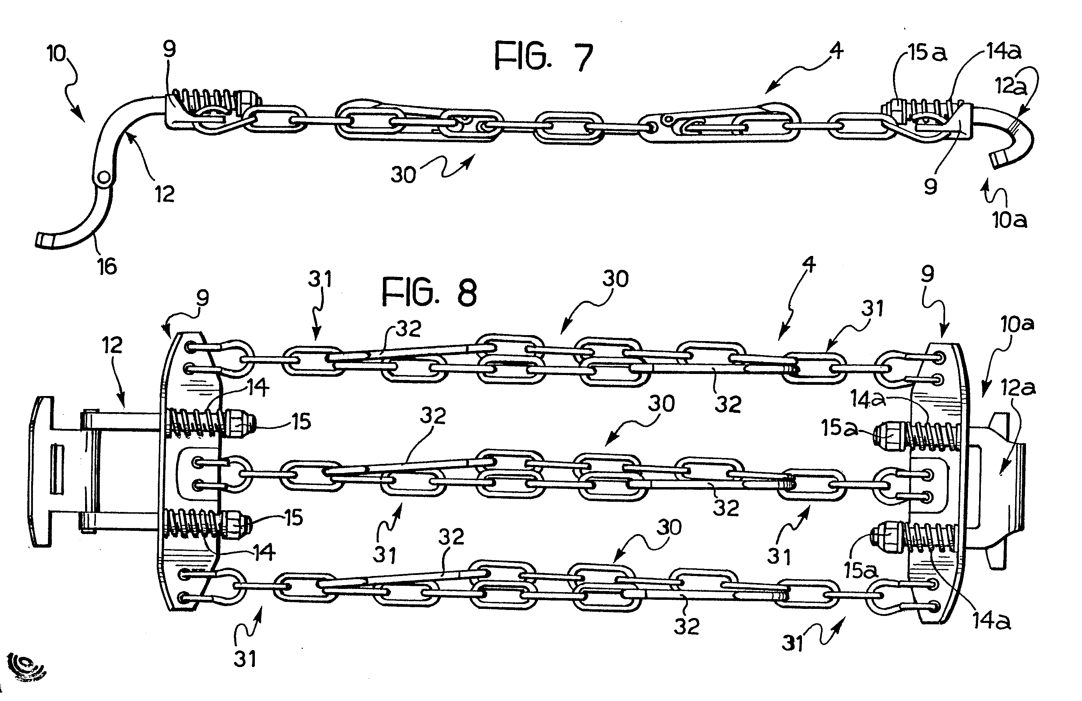

With reference to Figures 4 to 6, each segment 4 includes a central part which, in the embodiment shown, is constituted by a plurality of plates 5 disposed in two rows in a chequered arrangement, each plate having two flanges 5a perpendicular to the plane of the plate along two edges perpendicular to the length of the segment. The plates 5 of the two rows have partially-overlapping ends in correspondence with which are formed holes 5b (see Figure 6) through which a flexible metal cable 6 passes. The ends of the plates 5 situated at the two side edges of the segments also have holes 5c through which flexible cables 7 pass longitudinally of the segment. The plates 5 of each row are kept apart by rectangular-sectioned tubular spacer elements 8 also passed through by the flexible cables 7.

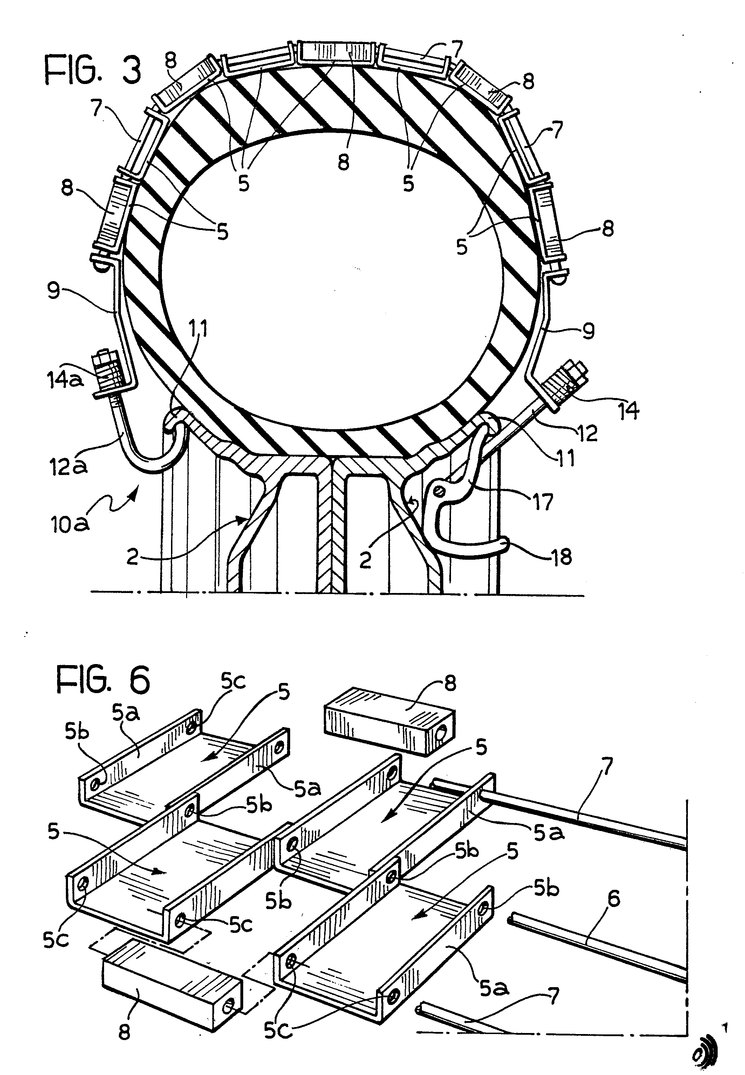

By virtue of this structure, the central part of the segment is readily flexible, both in the plane containing the axis of the wheel and in a plane perpendicular to the length of the segment. In the first case, flexibility is ensured by the flexibility of the metal cables 6, 7. In the second case, it is due to the fact that the plates 5 of the two rows can rotate freely relative to the metal cable 6 which passes through them. The opposite ends of the cables 6 and 7 are rigidly connected by any known technique (for example, by means of welding) to two end heads 9 in the form of sheet-metal plates. One of the two plates 9 is provided with a hook device 10a adapted to engage one of the two circumferential edges 11 (the one facing inwardly of the motor vehicle) of the rim 2 (see Figure 3). The hook device 10a comprises a hook member 12a constituted by a U-shaped element whose two end arms are mounted slidably in two holes 13 formed in the corresponding end head 9. The hook member 12a is biassed into a position adjacent the end head 9 by two helical springs 14a, each of which is interposed between the end head 9 and a nut 15a screwed onto a threaded end portion of the corresponding arm of the U-shaped body of the hook device 10a.

At the opposite end, the segment is provided with an end head 9 carrying a rapid-locking device 10. The rapid-locking device 10 comprises a support member 12 having a U-shaped body whose two end arms are slidably housed in two holes 13 formed in the corresponding end head 9. The support member 12 is biassed towards a position adjacent the end head 9 by two helical springs 14 each interposed between the head 9 and a nut 15 screwed onto a threaded end portion of the corresponding arm of the U-shaped body. The central section of this U-shaped body pivotally supports an engagement member 16 provided with an operating lever 18. The engagement member 16 is provided with two prongs 17 intended to engage the circumferential edge 11 of the rim 2 which faces outwardly of the motor vehicle (see Figure 2). In the embodiment illustrated in Figures 1-6, the operating lever or handle 18 is formed in one piece with the member 16.

In order to fit each segment 4, the member 12a is first hooked onto the circumferential edge of the rim facing inwardly of the motor vehicle. On completion of this operation, the segment is placed astride the tyre and the prongs 17 are positioned in engagement with the peripheral edge of the outwardly-facing rim. At this point, the engagement member 16 is pivoted (clockwise with reference to Figure 4) by acting on the operating handle 18 so that this member passes a dead-point position beyond which the springs 14 keep the prongs 17 locked against the peripheral edge of the rim. The operative locked position of the segment is shown in Figure 3. Unlocking is effected by acting on the handle 18 and pulling it outwardly so that the lever passes the dead-point beyond which the springs 14 tend to thrust it further towards the position in which it is disengaged from the edge 11 of the wheel rim.

Figures 7 and 8 show a variant of the segment according to the invention which differs from the above-described solution in that the two end heads 9 are connected to each other by three chains 30. In the embodiment shown, each chain is constituted by two lengths of chain 31, each of which is anchored at one end to the respective head 9 and carries at its opposite end a spring catch 32 hooked to the other length of chain 31. Adjustment of the position of the two spring catches 32 thus enables the overall length of each chain 30 to be varied, so as to adapt the device to different sizes of tyre.

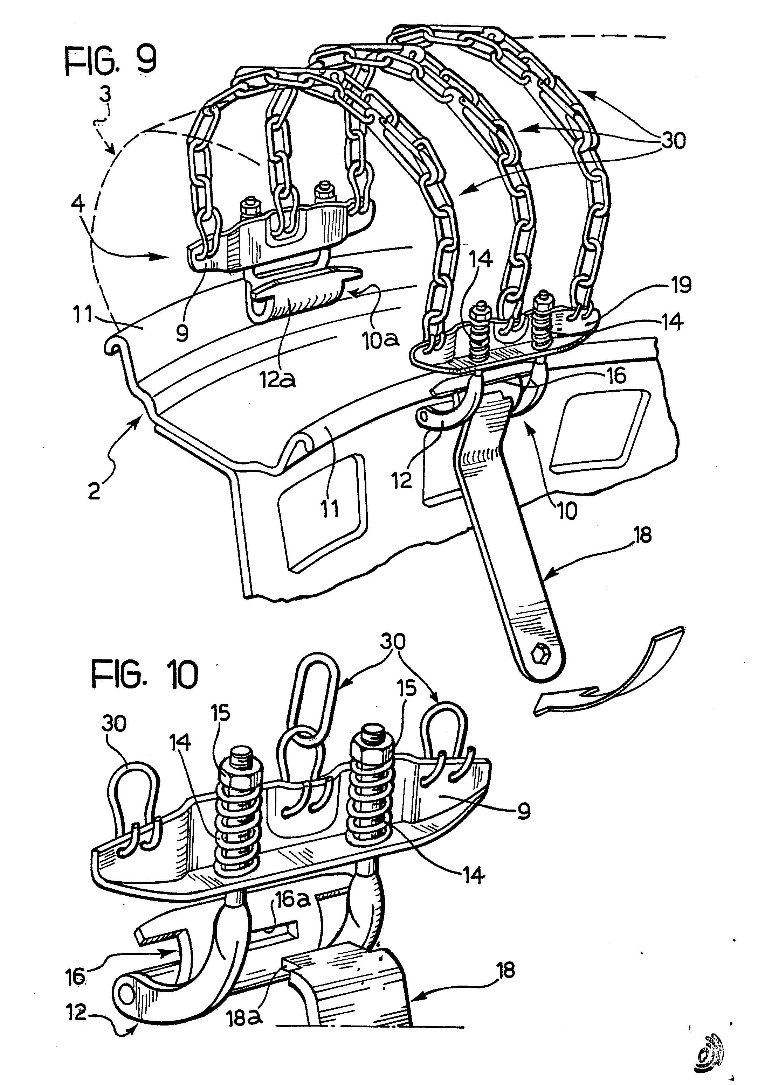

A further difference with respect to the above-described solution lies in the fact that, in this case, the operating lever 18 is constituted by an element separate from the engagement member 16 (see Figures 9 and 10) and having a frontal tooth 18a which can be fitted into a corresponding aperture 16a formed in the engagement member 16 to connect the operating lever 18 to the engagement member 16.

It is clear from the above description that the segment according to the invention can be fitted easily and quickly. At the same time, it ensures the grip of the wheel on the ground. Naturally, the number of segments which are fitted on each wheel may vary in dependence on the ground conditions. When the anti-slip device is to be used for a very short time, for example, solely for the purpose of mounting the snow- and/or ice-covered ramp to a garage or the like, the driver could even fit a single segment on each driving wheel of the motor vehicle, with the advantage that less time is spent mounting and removing the device.

Naturally, the principle of the invention remaining the same, the details of construction and forms of embodiment may vary widely with respect to those described and illustrated purely by way of example, without thereby departing from the scope of the present invention.

## Claims

1. An anti-slip segment for a motor vehicle wheel, characterised in that it comprises two end heads (9) connected to each other by chain means (4) and provided respectively with a hook device (10a) adapted to engage one of the peripheral edges of the wheel rim (2) and with a rapid-locking device (10) adapted to engage the other peripheral edge (11) of the wheel rim (2).

2. An anti-slip segment according to Claim 1, characterised in that the rapid-locking device (10) comprises:
- a support member (12) slidably connected to the corresponding end head (9) of the segment,
- a member (16) for engagement with the wheel rim, pivotably mounted on the support member (12) and adapted to engage the corresponding circumferential edge (11) of the wheel rim,
- resilient means (14) interposed between the engagement member (16) and the support member (12) for urging the engagement member (16) against the edge of the rim, when the segment is locked onto the tyre of the wheel, by bringing the engagement member (16) into contact with the edge of the rim and pivoting the engagement member beyond a dead-point into a locking position, and
- a lever (18) for operating the engagement (16).

3. An anti-slip segment according to Claim 2, characterised in that the support member has a U-shaped body whose two end arms are slidably mounted in holes (13) formed in the corresponding end head (9), the resilient means being constituted by two helical springs (14) each interposed between the end head (9) and a nut (15) connected to the respective arm of the U-shaped body (12).

4. An anti-slip segment according to Claim 1, characterised in that the chain means comprise a series of metal plates (5) in a chequered arrangement and connected to each other by flexible metal cables (6, 7) which pass freely through them longitudinally of the segment.

5. An anti-slip segment according to Claim 4, characterised in that the plates (5) of each row are spaced apart by tubular spacer elements (8) of prismatic section.

6. An anti-slip segment according to Claim 5, characterised in that each plate (5) has two lateral flanges (5a) perpendicular to the plane of the plate, along two edges perpendicular to the length of the metal cables.

7. An anti-slip segment according to Claim 1, characterised in that the hook device (10a) comprises a hook member (12a) slidably connected to the corresponding end head (9) with the interposition of resilient means (14a) which tend to urge it towards the end head.

8. An anti-slip segment according to Claim 7, characterised in that the hook member (12a) has a U-shaped body whose two end arms are slidably mounted in holes formed in the corresponding end head (9), the resilient means being constituted by two helical springs (14a) each interposed between the end head (9) and a nut connected to the corresponding arm of the U-shaped body.

9. An anti-slip segment according to Claim 2, characterised in that the operating lever (18) is formed in one piece with the engagement member (16).

10. An anti-slip segment according to Claim 2, characterised in that the operating lever (18) is constituted by an element separate from the engagement member (16) and connectible thereto.

11. An anti-slip segment according to Claim 10, characterised in that the operating lever (18) has a tooth (18a) which can be fitted into an aperture (16a) formed in the engagement member (16).

12. An anti-slip segment according to Claim 2, characterised in that the chain means comprise a plurality of chains (30) which connect the two end heads (9).

13. An anti-slip segment according to Claim 12, characterised in that each chain (30) comprises two lengths of chain (31), each having one end anchored to a respective end head (9) and the other end hooked to a ring of the other length of chain (31) by means of a spring-catch device (32).

14. An anti-slip device for motor vehicle wheels, characterised in that it comprises a plurality of segments according to one or more of the preceding claims, which can be mounted astride the tyre of the wheel in angularly spaced-apart positions.

FIG. 1

FIG. 2

0267885

FIG. 3

0267885

FIG. 6

0267885

FIG. 4

FIG. 5

0267885

FIG. 7

FIG. 8

**FIG. 9**

**FIG. 10**